# EUROPÄISCHE PATENTSCHRIFT

(11) **EP 4 071 373 B1**
(45) Veröffentlichungstag und Bekanntmachung des Hinweises auf die Patenterteilung: **10.01.2024**
(21) Anmeldenummer: 22000097.0
(22) Anmeldetag: 06.04.2022
(51) Int. Cl.: F16C 1/26

(54) **SEILZUGEINHEIT**
CABLE TRACTION UNIT
UNITÉ DE TIRANT À CÂBLE

(30) Priorität: 08.04.2021 DE 202021001300 U
(43) Veröffentlichungstag der Anmeldung: 12.10.2022
(73) Patentinhaber: SZW Prophet GmbH, 98694 Ilmenau / OT Gehren (DE)
(72) Erfinder: Prophet, Jörg, 98694 Ilmenau /OT Gehren (DE)
(74) Vertreter: Weihrauch, Frank

(56) Entgegenhaltungen:
- WO-A1-98/15745
- DE-A1- 19 836 703
- DE-A1-102007 017 715

## Beschreibung

Die Erfindung betrifft eine Seilzugeinheit, insbesondere für schmutzexponierte Anwendungen.

Aus dem Stand der Technik sind Seilzüge als solche bekannt. Insbesondere sind Lösungen bekannt, bei denen ein Zugseil in einer Zughülle geführt wird. Nachteilig ist hierbei, dass bei einem Eindringen von Verschmutzungen in den Ringraum zwischen dem Zugseil und der Zughülle die Funktion durch erhöhten Verschleiß und erhöhte Reibung sowie durch mögliche Korrosion beeinträchtigt wird.

Hierzu ist es aus dem Stand der Technik ferner bekannt, die Zughülle mit einem Gleitrohr auszubilden, das die Reibung zwischen dem Zugseil und der Zughülle reduziert. Um das Gleitrohr axial gegenüber der Stützhülle der Zughülle festzulegen ist es zudem bekannt, das Gleitrohr an dessen Ende mit einer konusartigen Aufweitung zu versehen, die sich gegen die Stützhülle abstützt. Um ein Eindringen von Schmutz oder anderen Fremdkörpern zu erschweren ist es häufig wünschenswert, einen Überstand des Gleitrohrs über die axiale Erstreckung der Stützhülle hinaus vorzusehen. Nach dem Stand der Technik wird dann ein weiteres Gleitrohr als Schutzrohr in axialer Fortsetzung des Gleitrohrs angeordnet. Nachteilig sind hierbei der zusätzliche Herstellungsaufwand, die zusätzlichen Maßnahmen zur Anordnung und Befestigung des Schutzrohrs sowie der erhöhte Reibungswiderstand und Verschleiß an der Stoßstelle zwischen dem Gleitrohr und dem Schutzrohr.

DE 10 2007 017715 A1 offenbart die Merkmale des Oberbegriffs von Anspruch 1.

Die Aufgabe der Erfindung ist es, eine Seilzugeinheit mit einem erhöhten Schutz gegen das Eindringen von Schmutz, Fremdkörpern und Feuchtigkeit aufzuzeigen, der einen geringen axialen Reibungswiderstand, eine hohe Verschleißfestigkeit und eine hohe Zuverlässigkeit aufweist und ferner kostengünstig herstellbar ist.

Die Aufgabe wird durch die im Anspruch 1 aufgeführten Merkmale gelöst.

Bevorzugte Weiterbildungen ergeben sich aus den Unteransprüchen.

Die erfindungsgemäße Seilzugeinheit weist als Grundkomponenten ein Zugseil, eine Zughülle und eine Zugendkappe auf.

Das Zugseil ist in an sich bekannter Weise längserstreckt, flexibel und längenfest ausgebildet. Insbesondere kann es sich hierbei um ein mehradriges Stahlseil handeln. Als längenfest wird verstanden, dass Längungen unter Zugbelastung in der Längsachse lediglich ein solches Maß aufweisen, dass die Funktion der zu betätigenden Komponente ermöglicht bleibt. Ferner ist das Zugseil zumindest abschnittsweise in der Zughülle angeordnet und hierbei axial relativ zu der Zughülle verschieblich. Die Zughülle führt somit das Zugseil und gibt damit einen Bewegungsraum vor, in dem sich das Zugseil entlang seiner Längsachse axial bewegen kann.

Die Zughülle ist ebenfalls in an sich bekannter Weise längserstreckt, flexibel und längenfest ausgebildet. Sie weist eine Stützhülle, eine Ummantelung und ein Gleitrohr auf.

Die Stützhülle ist in der Regel als eine Drahtspirale, vorzugsweise als eine Flachdrahtspirale, ausgebildet, wobei aber auch andere Bauarten möglich sind. Hierbei ist die Stützhülle ausgebildet, das Zugseil aufzunehmen und zu führen. Die Stützhülle stellt innerhalb der Zughülle die Struktur zur primären Aufnahme der mechanischen Belastungen dar. Sie ist insbesondere bei axialen Druckbelastungen in einem Bowdenzug stabil gegen Stauchungen. Weiterhin ist sie stabil gegen seitliche Krafteinwirkungen und sichert so einen im Wesentlichen runden Innenquerschnitt und somit den Bauraum für das Gleitrohr und den Bewegungsraum für das Zugseil. Ferner verhindert die Stützhülle die Entstehung von unerwünscht engen Biegeradien.

Die Ummantelung umschließt schlauchartig die Stützhülle und stellt einen Schutz vor Umgebungseinflüssen, insbesondere vor Schutz und Feuchtigkeit, bereit.

Das Gleitrohr ist konzentrisch in der Stützhülle angeordnet, spannt einen im Wesentlichen runden Innenquerschnitt auf und steht in einem Gleitkontakt zu dem Zugseil. Hierfür weist das Gleitrohr vorzugsweise eine tribologisch optimierte Materialbeschaffenheit auf. Es ist zudem insoweit flexibel ausgebildet, dass es den Verformungen der Stützhülle zur Richtungsänderung der Längsachse folgen kann.

Erfindungsgemäß weist das Gleitrohr einen axialen Gleitrohrüberstand auf. Es handelt sich um einen Überstand des Gleitrohrs über das Stützhüllenende hinaus. In dem Abschnitt des Gleitrohrüberstands ist das Gleitrohr nicht durch die Stützhülle ummantelt.

Die erfindungsgemäße Lösung ist insbesondere dadurch gekennzeichnet, dass das Gleitrohr eine Ringtulpung aufweist.

Als Ringtulpung wird ein Aufweitungsabschnitt des Gleitrohrs verstanden, in dem der Außendurchmesser größer ist als bei den Gleitrohrabschnitten beidseits des Aufweitungsabschnitts. Es handelt sich um eine ringförmige Auswölbung. Der Außendurchmesser ist vorzugsweise größer als der Innendurchmesser der Stützhülle.

Die Ringtulpung ist ferner erfindungsgemäß axial zu einem Gleitrohrende beabstandet. Als Beabstandung wird verstanden, dass die axiale Länge des Gleitrohrs zwischen dem Gleitrohrende und der Ringtulpung mindestens so groß ist wie die Differenz aus dem Außendurchmesser des Gleitrohrs an der Ringtulpung und dem Außendurchmesser des Gleitrohrs im Bereich des axialen Gleitrohrüberstands, vorzugsweise jedoch wesentlich größer. Die Beabstandung wird durch den axialen Gleitrohrüberstand bereitgestellt.

Aufgrund der Differenz der beiden Außendurchmesser werden an der Ringtulpung beidseits axiale Ringflächen ausgebildet, die vorzugsweise in jeweils einer zur Längsachse des Gleitrohrs im Wesentlichen orthogonalen Ebene liegen. Die Ringflächen können aber auch eine Neigung oder Krümmung aufweisen. Bei der zu dem Gleitrohrende gerichteten Ringfläche handelt es sich um die distale axiale Ringfläche und bei der Ringfläche an der anderen Flanke der Ringtulpung handelt es sich um die proximale axiale Ringfläche.

Die proximale axiale Ringfläche stützt sich axial an einer Stützhüllengegenringfläche ab. Dadurch wird die Lagebeziehung zwischen dem Gleitrohr und der Stützhülle axial einseitig festgelegt, so dass die bei einer bestimmungsgemäßen Verwendung wirkenden Reibungskräfte zwischen dem Zugseil und dem Gleitrohr einseitig axial auf die Stützhülle übertragen werden.

Die Zugendkappe ummantelt zumindest abschnittsweise den Gleitrohrüberstand. Vorzugsweise ummantelt die Zugendkappe zugleich auch abschnittsweise die Stützhülle mit Ummantelung in der von der Ringtulpung aus betrachteten entgegengesetzten, also proximalen axialen Erstreckung. Damit ummantelt die Zugendkappe zugleich auch die Ringtulpung.

Die Zugendkappe weist ferner eine Zugendkappengegenringfläche auf, an der sich die distale axiale Ringfläche der Ringtulpung axial abstützt. Hiermit wird erfindungsgemäß die Lagebeziehung zwischen der Zugendkappe einerseits sowie dem Gleitrohr anderseits axial einseitig festgelegt, so dass die bei einer bestimmungsgemä-ßen Verwendung wirkenden Reibungskräfte zwischen dem Zugseil und dem Gleitrohr einseitig axial auf die Zugendkappe sowie - soweit die Zugendkappe und die Stützhülle als zugfest verbundene Baugruppe vorliegen - mittelbar auch auf die Stützhülle übertragen werden.

Die beiden einseitigen axialen Lagefestlegungen mittels der beiden axialen Ringflächen der Ringtulpung sind einander entgegengerichtet, so dass in deren Zusammenwirken eine zuverlässige, beidseitige und formschlüssige Lagefestlegung des Gleitrohrs bereitgestellt wird.

Die erfindungsgemäße Seilzugeinheit weist insbesondere die nachfolgend beschriebenen Vorteile auf.

Es wurde überraschend eine Lösung gefunden, mit der eine erhöhte Schutzwirkung gegen Umgebungseinflüsse mittels eines Gleitrohrüberstandes ohne ein zusätzliches Gleitrohr für einen Gleitrohrüberstand ausgebildet werden kann. Vielmehr wird das Gleitrohr zusammen mit dem Gleitrohrüberstand monolithisch ausgebildet und kann trotzdem zuverlässig formschlüssig gegen axiale Verschiebung in der Stützhülle gesichert werden.

Vorteilhaft ist hierbei die erhöhte axiale Belastbarkeit, also die verbessert axiale Kraftübertragung zwischen dem Gleitrohr und der Stützhülle sowie der Zugendkappe.

Die erfindungsgemäße Seilzugeinheit kann vorteilhaft sowohl als Bowdenzugausführung, also mit einer zusätzlichen Druckkraftaufnahme der Zughülle, als auch als eine Ausführung, bei der die Zughülle lediglich der Führung und Richtungsumlenkung dient, bereitgestellt werden.

Hierbei besteht der besondere Vorteil, dass ohne weitere Zusatzmaßnahmen im Vergleich zu einer zweistückigen Ausbildung aus dem Stand der Technik der Gleitrohrüberstand durch den in der Stützhülle liegenden Abschnitt des Gleitrohrs stabilisiert wird. Damit wird zugleich die Zugendkappe entlastet. Die Zugendkappe und der Gleitrohrüberstand stützen sich gegenseitig.

Zudem wird vorteilhaft ein Versatz des Gleitrohrs quer zur Längsachse an der Austrittsstelle aus der Stützhülle ausgeschlossen. Dadurch wird sowohl eine zusätzliche Reibung als auch ein gesteigerter Verschleiß an dieser kritischen Stelle ausgeschlossen. Damit werden sowohl das Betriebsverhalten verbessert als auch die Lebensdauer erhöht.

Weiterhin wird der technologische Vorteil erreicht, dass die Fertigung vereinfacht und störunanfälliger durchgeführt werden kann. Mit dem Einsetzen des Gleitrohrs in die Stützhülle bis zum Anschlag der Ringtulpung an dem Stützhüllenende ist zugleich auch der Gleitrohrüberstand positioniert. Zudem wird damit das prozesssichere Aufsetzen der Zugendkappe vereinfacht.

Gemäß einer ersten vorteilhaften Weiterbildung überkront die Zugendkappe ferner einen Zughüllenendabschnitt.

Entsprechend dieser Weiterbildung ummantelt die Zugendkappe sowohl ganz oder abschnittsweise den Gleitrohrüberstand als auch die Stützhülle an einem Zughüllenendabschnitt. Damit wird das Gleitrohr beidseits der Ringtulpung gestützt und zudem beidseits axial formschlüssig festgelegt.

Entsprechend einer weiteren vorteilhaften Weiterbildung ist die Zughülle axial druckfest und somit die Seilzugeinheit als Bowdenzug ausgebildet. Vorteilhaft wird damit eine Lösung auch für die bei einem Bowdenzug wirkenden hohen axialen Kräfte zwischen dem Zugseil und der Zughülle angegeben.

Nach einer nächsten vorteilhaften Weiterbildung weist das Gleitrohr einen erweiterten Gleitrohrüberstand auf, der axial über das Zugendkappenende hinweg hinausführt.

Damit kann vorteilhaft ein erhöhter Schutz vor Schmutz- und Feuchtigkeitseintritt erreicht werden, wenn entsprechend der technischen Einbausituation das Ende der Zughülle und der Anschlusspunkt für das Zugseil einen erhöhten Abstand aufweisen müssen und in diesem Bereich mit nachteiligen Umgebungseinflüssen zu rechnen ist. Hier ist die durch die monolithische Ausbildung besondere axiale Führung und zugleich Stabilisierung des Gleitrohrüberstandes, hier vorliegend als erweiterter Gleitrohrüberstand, besonders vorteilhaft.

Die Erfindung wird als Ausführungsbeispiel anhand von
Fig. 1 Schnittansicht einer Seilzugeinheit
Fig. 2 Vergrößerungsausschnitt im Bereich der Zugendkappe
Fig. 3 Vergrößerungsausschnitt im Bereich der Ringtulpung
näher erläutert.

Hierbei beziehen sich gleiche Bezugszeichen in den verschiedenen Figuren auf jeweils gleiche Merkmale oder Bauteile. Die Bezugszeichen werden in der Beschreibung auch dann verwandt, sofern sie in der betreffenden Figur nicht dargestellt sind.

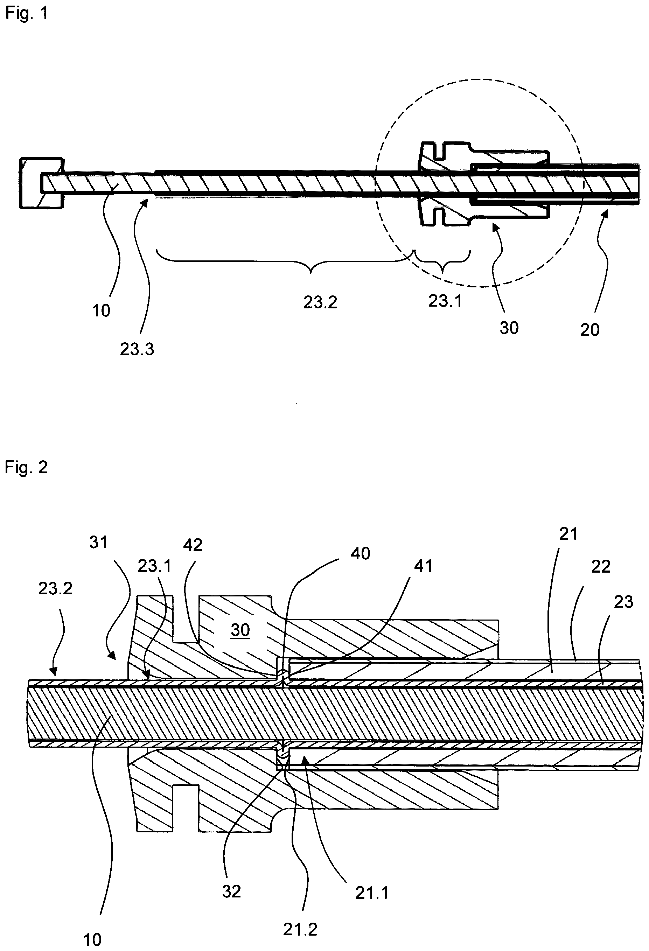

Figur 1 zeigt ein Ausführungsbeispiel einer erfindungsgemäßen Seilzugeinheit.
Figur 2 zeigt zu demselben Ausführungsbeispiel einen Vergrößerungsausschnitt im Bereich der Zugendkappe 30.

Das Ausführungsbeispiel wird daher nachfolgend anhand der Fig. 1 und der Fig. 2 zusammengefasst beschrieben.

Das Zugseil 10 wird in der Zughülle 20 geführt. Die Zughülle 20 wird durch die Stützhülle 21, das Gleitrohr 23 und die Ummantelung 22 gebildet, wobei die Ummantelung 22 die Stützhülle 21 an deren Außenumfang schlauchartig umschließt und die Stützhülle 21 das Gleitrohr 23 in sich aufnimmt.

Das Gleitrohr 23 überragt axial mit einem axialen Gleitrohrüberstand 23.1 sowie in der axialen Fortsetzung zudem mit einem erweiterten axialen Gleitrohrüberstand 23.2 die Stützhülle 21 und die Ummantelung 22 und umschließt auch in diesem Abschnitt das Zugseil 10 und schützt es vor Schmutz und anderen Umgebungseinflüssen.

Die Zugendkappe 30 ist auf die Stützhülle 21 mit der Ummantelung 22 aufgeschoben und mit dieser Baugruppe axial kraftschlüssig und im übrigen formschlüssig verbunden. An dem Zugkappenende 31 tritt das Gleitrohr 23 mit seinem erweiterten axialen Gleitrohrüberstand 23.2 aus. Die Zugendkappe 30 weist im vorliegenden Ausführungsbeispiel zudem einen Formabschnitt in Gestalt einer umlaufenden Ringnut (ohne Bezugszeichen) auf, mit der die Zugendkappe 30 und damit mittelbar die Zughülle 20 an einem Bauteil einer Vorrichtung, an der die Seilzugeinheit eine mechanische Betätigung vornehmen soll, formschlüssig befestigt werden kann.

Das Gleitrohr 23 weist zudem die Ringtulpung 40 auf. Die Ringtulpung 40 ist beabstandet von dem Gleitrohrende 23.3 angeordnet, wobei der Abstand hier durch den axialen Gleitrohrüberstand 23.1 und den erweiterten axialen Gleitrohrüberstand 23.2 gebildet wird. Beidseits der Ringtulpung 40 ist vorliegend das Gleitrohr 23 in gleicher Weise, insbesondere mit dem jeweils gleichen Innendurchmesser und Außendurchmesser ausgebildet, so dass das Zugseil 10 ohne einen axialen Versatz des inneren Mantels des Gleitrohrs 23 und damit reibungs- und verschleißarm geführt werden kann.

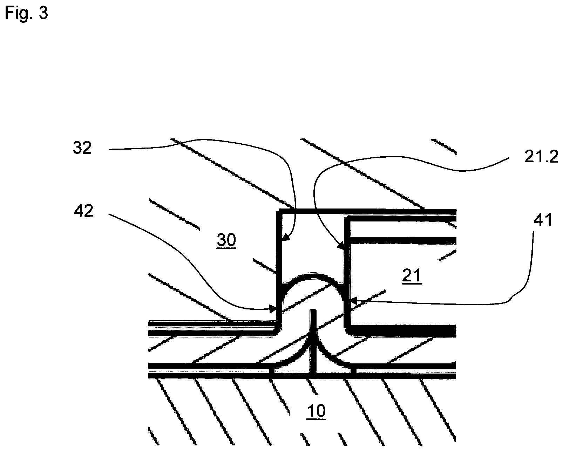

In Fig. 3 ist die Ringtulpung 40 nochmals vergrößert dargestellt. Sie ist als eine umlaufende Aufweitung in Form einer Ausstülpung ausgebildet, an deren Flanken sich die beiden axialen Ringflächen 41, 42 befinden.

Die proximale axiale Ringfläche 41 liegt axial an der Stützhüllengegenringfläche 21.2 an und stützt sich an dieser ab. Die von dem Zugseil 10 bei einer Einfahrtbewegung durch Reibung auf das Gleitrohr 23 übertragenen axialen Kräfte werden über den Druckkontakt zwischen der proximalen axialen Ringfläche 41 und der Stützhüllengegenringfläche 21.2 auf die Stützhülle 23 übertragen und das Gleitrohr 23 kann in der Stützhülle 21 nicht in Einfahrtrichtung verrutschen. Zugleich liegt die distale axiale Ringfläche 42 axial an der Zugendkappengegenringfläche 32 an und stützt sich an dieser ab. Die von dem Zugseil 10 bei einer Ausfahrtbewegung durch Reibung auf das Gleitrohr 23 übertragenen axialen Kräfte werden über den Drucckontakt zwischen der distalen axialen Ringfläche 42 und der Zugendkappengegenringfläche 32 auf die Zugendkappe 30 übertragen und das Gleitrohr 23 kann in der Stützhülle 21 nicht in Ausfahrtrichtung verrutschen.

Die Montage der Baueinheit aus Zughülle 20 und Endkappe 30 erfolgt in dem vorliegenden Ausführungsbeispiel zunächst durch ein Einschieben des Gleitrohrs 23 mit seiner Ringtulpung 40 in die Stützhülle 21 mit zuvor aufgezogener Ummantelung 22. Das Einschieben des Gleitrohrs 23 erfolgt soweit, bis die proximale axiale Ringfläche 41 an der Stützhüllengegenringfläche 21.2 anliegt. Nachfolgend wird die Zugendkappe 30 in proximaler Bewegungsrichtung zunächst über den erweiterten axialen Gleitrohrüberstand 23.2 und nachfolgend auch über die Zughülle 20 mit Stützhülle 21 und Ummantelung 22 geführt, bis die Zugendkappengegenringfläche 32 an der distalen axialen Ringfläche 42 der Ringtulpung 40 anliegt.

### Verwendete Bezugszeichen

- 10: Zugseil
- 20: Zughülle
- 21: Stützhülle
- 21.1: Stützhüllenende
- 21.2: Stützhüllengegenringfläche
- 22: Ummantelung
- 23: Gleitrohr
- 23.1: axialer Gleitrohrüberstand
- 23.2: erweiterter axialer Gleitrohrüberstand
- 23.3: Gleitrohrende
- 30: Zugendkappe
- 31: Zugendkappenende
- 32: Zugendkappengegenringfläche
- 40: Ringtulpung
- 41: proximale axiale Ringfläche
- 42: distale axiale Ringfläche

## Patentansprüche

1. Seilzugeinheit,
aufweisend ein Zugseil (10), eine Zughülle (20) und eine Zugendkappe (30), wobei dass Zugseil (10) längserstreckt, flexibel und längenfest ausgebildet und zumindest abschnittsweise in der Zughülle (20) angeordnet sowie axial relativ zu der Zughülle (20) verschieblich ist,
wobei die Zughülle (20) längserstreckt, flexibel und längenfest ausgebildet ist und eine Stützhülle (21), eine Ummantelung (22) und ein Gleitrohr (23) aufweist,
wobei die Stützhülle (21) ausgebildet ist, das Zugseil (10) aufzunehmen und zu führen,
wobei das Gleitrohr (23) konzentrisch in der Stützhülle (21) angeordnet ist, in einem Gleitkontakt zu dem Zugseil (10) steht und zu einem Stützhüllenende (21.1) einen axialen Gleitrohrüberstand (23.1) aufweist,
**dadurch gekennzeichnet, dass**
das Gleitrohr eine Ringtulpung (40) aufweist,
wobei die Ringtulpung (40) axial zu einem Gleitrohrende (23.3) beabstandet ist, und eine proximale axiale Ringfläche (41) und eine distale axiale Ringfläche (42) aufweist und wobei sich die proximale axiale Ringfläche (41) axial an einer Stützhüllengegenringfläche (21.2) abstützt,
und wobei die Zugendkappe (30) zumindest abschnittsweise den Gleitrohrüberstand (23.1) ummantelt und eine Zugendkappengegenringfläche (30.1) aufweist, an der sich die distale axiale Ringfläche (42) axial abstützt.

2. Seilzugeinheit nach Anspruch 1,
**dadurch gekennzeichnet,**
**dass** die Zugendkappe (30) ferner einen Zughüllenendabschnitt (24) überkront.

3. Seilzugeinheit nach einem der vorhergehenden Ansprüche,
**dadurch gekennzeichnet,**
**dass** die Seilzugeinheit als Bowdenzug und die Zughülle (20) axial druckfest ausgebildet ist.

4. Seilzugeinheit nach einem der vorhergehenden Ansprüche,
**dadurch gekennzeichnet,**
**dass** das Gleitrohr (23) einen über ein Zugkappenende (31) hinausführenden erweiterten axialen Gleitrohrüberstand (23.2) aufweist.

## Claims

1. A traction cable unit,
comprising a traction cable (10), a traction sheath (20) and a traction end cap (30),
wherein the traction cable (10) has a longitudinally elongated, flexible and longitudinally rigid design and is arranged, at least in sections, in the traction sheath (20), and is axially displaceable relative to the traction sheath (20), wherein the traction sheath (20) is longitudinally elongated, flexible and longitudinally rigid and comprises a supporting sleeve (21), a jacket (22) and a sliding tube (23),
wherein the supporting sleeve (21) is designed to receive and guide the traction cable (10),
wherein the sliding tube (23) is arranged concentrically in the supporting sleeve (21), is in sliding contact with the traction cable (10) and has an axial sliding tube projection (23.1) towards one end of the supporting sleeve (21.1),
**characterized in**
**that** the sliding tube has an annular tulip-shaped portion (40),
wherein the annular tulip-shaped portion (40) is axially spaced from a sliding tube end (23.3) and has a proximal axial annular surface (41) and a distal axial annular surface (42), and wherein the proximal axial annular surface (41) is axially supported on a supporting sleeve counter annular surface (21.2),
and wherein the traction end cap (30) encases, at least in sections, the sliding tube projection (23.1) and has a traction end cap counter annular surface (30.1) on which the distal axial annular surface (42) is axially supported.

2. The traction cable unit according to claim 1,
**characterized in**
**that** the traction end cap (30) also crowns a traction sheath end portion (24).

3. The traction cable unit according to one of the preceding claims,
**characterized in**
**that** the traction cable unit is designed as a Bowden cable and the traction sheath (20) is designed to be resistant against axial compression.

4. The traction cable unit according to one of the preceding claims,
**characterized in**
**that** the sliding tube (23) has a prolonged axial sliding tube projection (23.2) extending beyond a traction cap end (31).

## Revendications

1. Unité de traction à câble,
présentant un câble de traction (10), une gaine de traction (20) et un capuchon d'extrémité de traction (30),
où le câble de traction (10) est formé de façon allongé, flexible et résistant à la longueur et est disposé au moins par sections dans la gaine de traction (20) et peut être déplacé axialement par rapport à la gaine de traction (20),
où la gaine de traction (20) est formé de façon allongé, flexible et résistant à la longueur et présente une gaine de support (21), une enveloppe (22) et un tube de glissement (23),
où la gaine de support (21) est formée pour prendre le câble de traction (10) et le guider,
où le tube de glissement (23) est disposé de manière concentrique dans la gaine de support (21), est en contact glissant avec le câble de traction (10) et présente un dépassement axial de tube de glissement (23.1) par rapport à une extrémité de gaine de support (21.1),
est **caractérisée en ce que** le tube de glissement présente un tulipage en anneaux (40),
où le tulipage en anneaux (40) est espacée axialement d'une extrémité de tube de glissement (23.3) et présente une surface annulaire axiale proximale (41) et une surface annulaire axiale distale (42) et où la surface annulaire axiale proximale (41) s'appuie axialement sur une surface annulaire opposée de gaine de support (21.2),
et où le capuchon d'extrémité de traction (30) enveloppe au moins par sections le dépassement de tube de glissement (23.1) et présente une surface annulaire opposée au capuchon d'extrémité de traction (30.1), sur laquelle la surface annulaire axiale distale (42) s'appuie axialement.

2. Unité de traction à câble suivant la revendication 1
est **caractérisée en ce**
**que** le capuchon d'extrémité de traction (30) recouvre en outre une section d'extrémité de gaine de traction (24).

3. Unité de traction à câble suivant une des revendications précédentes est **caractérisée en ce**
**que** l'unité de traction de câble est conçue comme un câble Bowden et que la gaine de traction (20) est résistante à la pression axiale.

4. Unité de traction à câble suivant une des revendications précédentes est **caractérisée en ce**
**que** le tube de glissement (23) présente un dépassement axial de tube de glissement (23.2) étendu, dépassant d'une extrémité (31) du capuchon de traction.
